# EUROPÄISCHE PATENTSCHRIFT

(11) **EP 1 917 629 B1**
(45) Veröffentlichungstag und Bekanntmachung des Hinweises auf die Patenterteilung: **31.10.2012**
(21) Anmeldenummer: 06762685.3
(22) Anmeldetag: 19.07.2006
(51) Int. Cl.: B65B 15/04, B65B 55/14

(54) **VORRICHTUNG UND VERFAHREN ZUM KONTINUIERLICHEN ERZEUGEN EINER FEHLERFREIEN TRÄGERBAHN**
DEVICE AND METHOD FOR CONTINUOUSLY PRODUCING A DEFECTIVE-FREE CARRIER STRIP
DISPOSITIF ET PROCEDE DE PRODUCTION EN CONTINU D'UNE BANDE DE SUPPORT EXEMPTE DE DEFAUTS

(30) Priorität: 23.08.2005 DE 102005041024
(43) Veröffentlichungstag der Anmeldung: 07.05.2008
(73) Patentinhaber: bielomatik Leuze GmbH + Co. KG, 72639 Neuffen (DE)
(72) Erfinder: BOHN, Martin, 72762 Reutlingen (DE); NITSCHKO, Harry, 72649 Wolfschlugen (DE)
(74) Vertreter: Greif, Thomas
(86) Internationale Anmeldenummer: PCT/EP2006/007084
(87) Internationale Veröffentlichungsnummer: WO 2007/022835

(56) Entgegenhaltungen:
- EP-A2- 1 096 423
- US-A1- 2005 025 553

## Beschreibung

Die Erfindung betrifft eine Vorrichtung zum kontinuierlichen Aussondern fehlerhafter Bauelemente aus einer Menge von Bauelementen, die lösbar auf mindestens einer Trägerbahn in mindestens einer Reihe fortlaufend angeordnet sind und eine Vorrichtung sowie ein Verfahren zum kontinuierlichen Erzeugen einer fehlerfreien Trägerbahn aus einer Trägerbahn mit darauf in mindestens einer Reihe fortlaufend angeordneten Bauelementen, wobei die Trägerbahn fehlerhafte und fehlerfreie Bauelemente aufweist.

Bei der Herstellung von endlosen Trägerbahnen, auf denen Bauelemente fortlaufend in Reihen angeordnet sind, kann die Forderung bestehen, dass sich ausschließlich funktionsfähige bzw. fehlerfreie Bauelemente auf der Trägerbahn befinden. Dies ist beispielsweise dann der Fall, wenn die Trägerbahn als Endlosrolle in einem Spendeautomaten bevorratet wird und die Bauelemente elektronische Informationsträger sind, die beispielsweise eine Palette oder ein Paket kennzeichnen.

Üblicherweise liegt als Vorstufe bei der Herstellung einer derartigen fehlerfreien Trägerbahn eine Trägerbahn vor, auf der sowohl fehlerfreie als auch fehlerhafte Bauelemente angeordnet sind. Die Fehlerquote wird üblicherweise durch den Produktionsausschuss bei der Herstellung der Bauelemente bestimmt.

In der EP 1 096 423 A2 sind Verfahren und Vorrichtungen zur Erzeugung einer derartigen fehlerfreien Trägerbahn beschrieben.

In einer ersten dort beschriebenen Variante wird die fehlerfreie Trägerbahn aus zwei Trägerbahnen erzeugt, auf denen jeweils fehlerfreie und fehlerhafte Bauelemente angeordnet sind. Auf der ersten Trägerbahn werden hierbei ausschließlich fehlerhafte Bauelemente durch einen Ablöseeinrichtung abgelöst und anschließend entfernt. Von der zweiten Trägerbahn werden ausschließlich fehlerfreie Bauelemente abgelöst und anschließend in Lücken der ersten Trägerbahn eingesetzt, die durch die Entfernung der fehlerhaften Bauelemente entstehen. Nach dem Ersetzungsvorgang bildet die erste Trägerbahn die fehlerfreie Trägerbahn.

In einer zweiten Variante ist eine erste Trägerbahn vorgesehen, auf der wiederum fehlerfreie und fehlerhafte Bauelemente angeordnet sind. Weiterhin ist eine zweite, leere Trägerbahn vorgesehen. Zur Erzeugung der fehlerfreien Trägerbahn werden von der ersten Trägerbahn zunächst alle Bauelemente abgelöst. Unter den abgelösten Bauelementen werden nun in einem Selektionsvorgang ausschließlich funktionsfähige Bauelemente auf die zweite, leere Trägerbahn übertragen, wodurch diese zur fehlerfreien Trägerbahn wird.

Aufgrund der selektiven Ablöse- bzw. Übertragungsvorgänge können bei beiden Varianten jedoch Betriebszustände auftreten, in denen eine Trägerbahngeschwindigkeit reduziert werden muss, um einen sicheren Betrieb zu gewährleisten.

Der Erfindung liegt daher die Aufgabe zugrunde, eine Vorrichtung zum kontinuierlichen Aussondern fehlerhafter Bauelemente und eine Vorrichtung sowie ein Verfahren zum kontinuierlichen Erzeugen einer fehlerfreien Trägerbahn zur Verfügung zu stellen, die einen sicheren Betrieb bei hoher Geschwindigkeit ermöglichen.

Die Erfindung löst diese Aufgabe durch eine Vorrichtung zum kontinuierlichen Aussondern fehlerhafter Bauelemente nach Anspruch 1, eine Vorrichtung zum kontinuierlichen Erzeugen einer fehlerfreien Trägerbahn nach Anspruch 13 sowie ein Verfahren zum kontinuierlichen Erzeugen einer fehlerfreien Trägerbahn nach Anspruch 17.

Den Vorrichtungen und dem Verfahren ist gemeinsam, dass die Bauelemente lösbar auf der Trägerbahn angeordnet sind. D.h. sie können von der Trägerbahn zerstörungsfrei abgelöst und anschließend wieder aufgebracht werden. Als Trägerbahnmaterial kann beispielsweise silikonbeschichtetes Papiermaterial oder ähnliches verwendet werden. An den Bauelementen und/oder auf der Trägerbahn kann eine Klebstoffschicht aufgetragen sein, die ein lösbares Verbinden von Trägerbahn und Bauelement ermöglicht.

Die Vorrichtung zum kontinuierlichen Aussondern fehlerhafter Bauelemente umfasst eine Kontrolleinrichtung zur Ermittlung fehlerhafter Bauelemente und eine Übernahmeeinrichtung zur Übernahme auszusondernder, fehlerhafter Bauelemente. Die Kontrolleinrichtung kann zur Ermittlung eines Bauelementzustands unterschiedliche Kriterien heranziehen. Wenn die Bauelemente elektronische Bauelemente mit einem Speicher sind, der kontaktlos ausgelesen werden kann, kann beispielsweise eine Überprüfung der Seriennummer des elektronischen Bauelements oder eine Überprüfung spezieller Speicherinhalte über eine Funkschnittstelle erfolgen. Alternativ oder zusätzlich kann eine Ansprechgeschwindigkeit beim Einbringen des Bauelements in ein elektromagnetisches Feld etc. herangezogen werden. Auch eine optische Kontrolle durch Kameras in Verbindung mit Bildverarbeitungsalgorithmen kann zur Ermittlung eines fehlerhaften Bauelementes verwendet werden. Die Übernahmeeinrichtung übernimmt ein fehlerhaftes Bauelement und transportiert es zu seiner weiteren Verarbeitung, beispielsweise einem Recycling oder einer Entsorgung, von der Trägerbahn weg. Erfindungsgemäß ist mindestens eine Ablöseeinrichtung, die jedes Bauelement zumindest teilweise von der Trägerbahn ablöst und bezogen auf eine vorhergehende Position versetzt auf der Trägerbahn wieder aufbringt, und mindestens eine Auswahleinrichtung vorgesehen, die ein von der Kontrolleinrichtung als fehlerhaft ermitteltes, zumindest teilweise von der Trägerbahn abgelöstes Bauelement derart auswählt, dass dieses von der Übernahmeeinrichtung übernommen wird. Da jedes Bauelement auf diese Weise schonend von der Trägerbahn abgelöst und, falls das Bauelement fehlerfrei ist, positionsversetzt wieder auf der Trägerbahn aufgebracht wird, ist kein selektiver, vom Zustand des Bauelements abhängiger Ablösevorgang notwendig, der eine Reduktion der Bahngeschwindigkeit erforderlich machen kann. D.h. der Ablösevorgang kann bei voller Bahngeschwindigkeit erfolgen. Dies erhöht den Durchsatz einer derartigen Vorrichtung. Die Ablöseeinrichtung und die Auswahleinrichtung arbeiten hierbei derart verzahnt, dass ein fehlerhaftes, teilweise abgelöstes Bauelement zur Auswahl derart mit einer Kraft beaufschlagt wird, dass es in Richtung der Übernahmeeinrichtung ausgelenkt wird, wodurch eine Übernahme bewirkt wird. Ein fehlerfreies Bauelement wird hierbei nicht mit einer Kraft beaufschlagt, wodurch es mit seinem abgelösten Bereich wieder auf einen versetzten Trägerbahnabschnitt aufgebracht wird.

In einer Weiterbildung umfasst die Ablöseeinrichtung eine erste Trägerbahnumlenkeinrichtung, wobei die Trägerbahn über die erste Trägerbahnumlenkeinrichtung geführt ist und die erste Trägerbahnumlenkeinrichtung durch Umlenken der Trägerbahn aus einer Transportrichtung in eine Ablöserichtung das teilweise Ablösen des Bauelements in Transportrichtung bewirkt. Bevorzugt umfasst die Ablöseeinrichtung weiterhin eine zweite Trägerbahnumlenkeinrichtung, wobei die Trägerbahn über die erste Trägerbahnumlenkeinrichtung und die zweite Trägerbahnumlenkeinrichtung geführt ist, die zweite Trägerbahnumlenkeinrichtung ein Umlenken der Trägerbahn in die Transportrichtung in einem zugehörigen Umlenkabschnitt bewirkt und in dem Umlenkabschnitt ein Wiederaufbringen des zumindest teilweise von der Trägerbahn abgelösten Bauelements auf die Trägerbahn erfolgt. Die erste und die zweite Trägerbahnumlenkeinrichtung ermöglichen ein einfaches Ablösen bzw. abschälen und anschließendes, versetztes Übernehmen der fehlerfreien Bauelemente auf die Trägerbahn. Bevorzugt umfasst die Ablöseeinrichtung zusätzlich eine Umlenkwalze, wobei die Trägerbahn über die erste Trägerbahnumlenkeinrichtung, die Umlenkwalze und die zweite Trägerbahnumlenkeinrichtung geführt ist. Dies ermöglicht eine einfache und flexible Transportbahnsteuerung, wobei über die Position der Umlenkwalze relativ zu den Trägerbahnumlenkeinrichtungen verschiedene Parameter, beispielsweise ein Maß an Versatz, eingestellt werden können. Bevorzugt weisen die erste Trägerbahnumlenkeinrichtung eine erste Fläche in einer Transportebene der Trägerbahn und die zweite Trägerbahnumlenkeinrichtung eine zweite Fläche in der Transportebene der Trägerbahn auf, wobei zwischen der ersten Fläche und der zweiten Fläche ein Spalt gebildet ist und eine Drehachse der Umlenkwalze außerhalb der Transportebene liegt. Die den Spalt begrenzenden Kanten der ersten und der zweiten Fläche verlaufen bevorzugt parallel. Die Drehachse der Umlenkwalze kann hierbei parallel zu den Kanten, in horizontaler Richtung in der Spaltmitte und in vertikaler Richtung um einen Betrag versetzt zur Transportebene verlaufen, der größer ist als ein Durchmesser der Umlenkwalze.

In einer Weiterbildung umfasst die Auswahleinrichtung eine Abtupfrolle, mit welcher ein fehlerhaftes, zumindest teilweise von der Trägerbahn abgelöstes Bauelement zur Auswahl in Richtung der Übernahmeeinrichtung ausgelenkt wird. Die Abtupfrolle kann beispielsweise gegen einen von der Trägerbahn abgelösten Bereich des Bauelements drücken, wobei dieser in Folge der Krafteinwirkung in Richtung der Übernahmeeinrichtung bewegt bzw. gebogen wird. Alternativ oder zusätzlich umfasst die Auswahleinrichtung eine Drucklufteinrichtung, mit welcher ein fehlerhaftes, zumindest teilweise von der Trägerbahn abgelöstes Bauelement zur Auswahl in Richtung der Übernahmeeinrichtung geblasen wird.

In einer Weiterbildung umfasst die Übernahmeeinrichtung eine Übernahmewalze zur Übernahme fehlerhafter Bauelemente. Bevorzugt weist die Übernahmewalze über ihren Umfang verteilte Luftzirkulationsöffnungen auf, die zur Erzeugung eines steuerbaren Unterdrucks oder Überdrucks dienen, der ein Haften oder Ablösen eines fehlerhaften, übernommenen Bauelements bewirkt. Eine derartige Ausgestaltung unterstützt ein Übernehmen und einen Abtransport eines fehlerhaften Bauelements, da das Bauelement durch den Unterdruck an die Übernahmewalze gezogen wird. Der steuerbare Unterdruck kann an einer geeigneten Position der Walze, beispielsweise bei einem Abstreifen des fehlerhaften Bauelements, abgeschaltet oder in einen Überdruck umgewandelt werden, wodurch ein Ablösen des Bauelements erleichtert wird. Bevorzugt ist eine mit der Übernahmewalze in Wirkverbindung stehende Sammelwalze zur Aufnahme fehlerhafter Bauelemente vorgesehen, wobei ein fehlerhaftes Bauelement von der Übernahmewalze auf die Sammelwalze übertragen wird. Die Sammelwalze kann die fehlerhaften Bauelemente in mehreren Lagen sammeln, wobei die Übernahmewalze durch Abstreifen des fehlerhaften Bauelements wieder in ihren Funktionszustand versetzt wird.

In einer Weiterbildung ist eine Andrückwalze vorgesehen, die ein Andrücken eines wieder aufgebrachten Bauelements auf die Trägerbahn bewirkt. Wenn ein fehlerfreies Bauelement durch die Ablöseeinrichtung zuerst von der Trägebahn abgelöst und anschließend versetzt wieder auf diese aufgebracht wird, ist zunächst die Haftung des Bauelements mit der Trägerbahn vermindert. Bei verminderter Haftung besteht jedoch die Gefahr, dass sich das Bauelement in nachfolgenden Trägerbahnabschnitten, beispielsweise im Bereich von Trägerbahnumlenkungen, ungewollt ablöst. Um diesen Effekt zu kompensieren, wird das Bauelement angedrückt, wodurch sich in etwa die ursprüngliche Haftung wieder einstellt.

In einer Weiterbildung sind die Bauelemente in mehreren Reihen auf der Trägerbahn angeordnet und jeder Reihe ist eine Auswahleinrichtung zugeordnet. Die Reihen können sich folglich die Kontrolleinrichtung, die Übernahmeeinrichtung und die Ablöseeinrichtung teilen. Da jedoch die Reihenfolge der fehlerhaften bzw. fehlerfreien Bauelemente zwischen den jeweiligen Reihen unterschiedlich sein kann, ist für jede Reihe eine eigene Auswahleinrichtung vorzusehen. Die Anordnung der Bauteile in mehreren Reihen auf der Trägerbahn ermöglicht eine parallelisierte Verarbeitung, d.h. der mögliche Durchsatz steigt in etwa proportional zu der Anzahl an Reihen.

Die erfindungsgemäße Vorrichtung zum kontinuierlichen Erzeugen einer fehlerfreien Trägerbahn umfasst eine oben beschriebene, erfindungsgemäße Vorrichtung zum kontinuierlichen Aussondern fehlerhafter Bauelemente und wenigstens eine Spendeeinrichtung, die in Bereiche der Trägerbahn, aus denen ein fehlerhaftes Bauelement ausgesondert ist, ein fehlerfreies Bauelement einfügt. Vorteilhaft werden für die Erzielung hoher Fördergeschwindigkeiten mehrere Spendeeinrichtungen eingesetzt, die vorzugsweise in Förderrichtung in Abstand hintereinander angeordnet sind. Die Kombination aus Aussonderungsvorrichtung und Spender ermöglicht die Erzeugung einer fehlerfreien Trägerbahn mit hoher Geschwindigkeit, da ein Aussondern ohne Reduktion der Trägerbahngeschwindigkeit erfolgen kann.

In einer Weiterbildung ist der Spendeeinrichtung eine weitere Trägerbahn zugeordnet, die ausschließlich fehlerfreie Bauelemente enthält.

In einer Weiterbildung sind die Bauelemente. Transponder. Bevorzugt ist eine Programmiereinheit vorgesehen, welche die Transponder auf der fehlerfreien Trägerbahn programmiert. Die Transponder werden vorzugsweise bei Transponderetiketten eingesetzt.

Bei dem erfindungsgemäßen Verfahren zum kontinuierlichen Erzeugen einer fehlerfreien Trägerbahn wird jedes Bauelement zumindest teilweise von der Trägerbahn abgelöst, ein fehlerhaftes, zumindest teilweise abgelöstes Bauelement entfernt, ein fehlerfreies Bauelement versetzt wieder auf die Trägerbahn aufgebracht und ein entferntes Bauelement durch einen fehlerfreies Bauelement ersetzt.

In einer Weiterbildung ist eine Trägerbahngeschwindigkeit konstant.

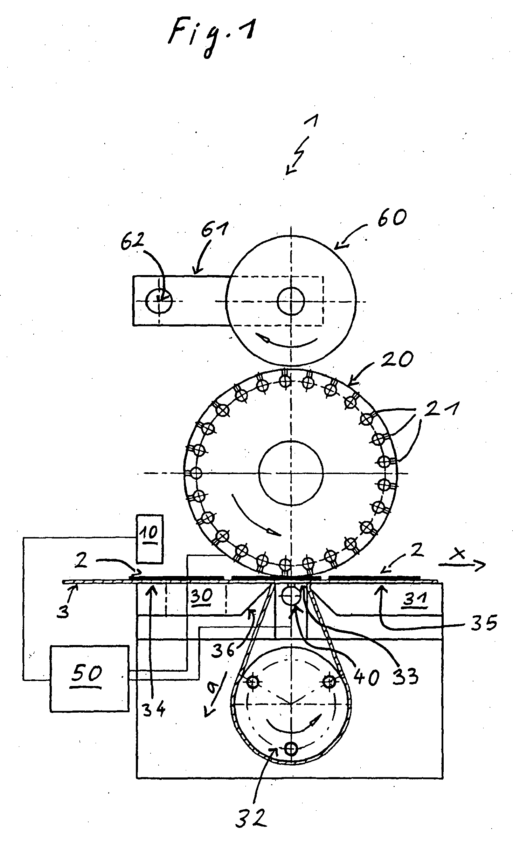

Weitere Vorteile und Merkmale der Erfindung ergeben sich aus den Ansprüchen sowie aus der nachfolgenden Beschreibung bevorzugter Ausführungsbeispiele der Erfindung, die an hand der Zeichnungen schematisch dargestellt sind. Hierbei zeigen:
Fig. 1
   eine Vorrichtung zum kontinuierlichen Aussondern fehlerhafter Transponder für einen Fall, bei dem ein Aussondern nicht erforderlich ist,
Fig.2
   die Vorrichtung zum kontinuierlichen Aussondern fehlerhafter Transponder von Fig. 1 für einen Fall, bei dem ein Aussondern eines fehlerhaften Transponders erforderlich ist,
Fig.3
   eine Vorrichtung zum kontinuierlichen Erzeugen einer fehlerfreien Trägerbahn mit der Vorrichtung zum kontinuierlichen Aussondern von Fig. 1 und
Fig.4
   eine Vorrichtung zum kontinuierlichen Erzeugen einer fehlerfreien Trägerbahn, auf der Transponder in mehreren Reihen auf der Trägerbahn angeordnet sind.

Fig. 1 zeigt eine Vorrichtung 1 zum kontinuierlichen Aussondern fehlerhafter Bauelemente in Form von Transpondern aus einer Menge von Transpondern 2, die lösbar auf einer Trägerbahn 3 in einer Reihe fortlaufend, äquidistant angeordnet sind. Die Transponder 2 sind bezüglich einer Transportrichtung x zentriert auf der Trägerbahn 3 angeordnet. Auf der Trägerbahn 3 können fehlerfreie und fehlerhafte Transponder 2 angeordnet sein.

Die Transponder 2 sind als flache, biegsame Folienbauteile ausgeführt und umfassen jeweils einen nicht gezeigten integrierten Schaltkreis mit Transponderfunktion, der mit einer folienförmigen Antenne gekoppelt ist. Die Transponder 2 sind auf ihrer der Trägerbahn 3 zugewandten Seite mit einer nicht gezeigten Klebstoffschicht versehen, die ein mehrmaliges Aufbringen und Lösen der Transponder 2 von der Trägerbahn 3 ermöglicht.

Die Vorrichtung 1 umfasst eine Kontrolleinrichtung bzw. ein Lesegerät 10 zur Ermittlung fehlerhafter Transponder 2, eine Übernahmeeinrichtung in Form einer Übernahmewalze 20 zur Übernahme auszusondernder, fehlerhafter Transponder 2, eine Ablöseeinrichtung umfassend eine erste Trägerbahnumlenkeinrichtung 30, eine zweite Trägerbahnumlenkeinrichtung 31 und eine Umlenkwalze 32, die jeden Transponder 2 zumindest teilweise von der Trägerbahn 3 ablöst und, falls fehlerfrei, bezogen auf eine vorhergehende Position versetzt auf der Trägerbahn 3 wieder aufbringt, eine Auswahleinrichtung in Form einer Abtupfrolle 40, die einen von der Kontrolleinrichtung 10 als fehlerhaft ermittelten, zumindest teilweise von der Trägerbahn 3 abgelösten Transponder 2 derart in Richtung der Übernahmewalze 20 auslenkt, dass dieser von der Übernahmewalze 20 übernommen und abtransportiert wird, eine Steuereinheit 50, die mit der Kontrolleinrichtung 10, der Übernahmewalze 20 und der Abtupfrolle 40 gekoppelt ist, und eine mit der Übernahmewalze 20 in Wirkverbindung stehende Sammelwalze 60 zur Aufnahme fehlerhafter Transponder.

Nachfolgend wird der Betrieb der Vorrichtung 1 beschrieben. In dem in Fig. 1 gezeigten Betriebszustand der Vorrichtung 1 sind alle gezeigten Transponder 2 fehlerfrei, d.h. es erfolgt kein Aussondern eines Transponders 2.

Die Transponder 2 werden der Vorrichtung 1 in Transportrichtung x auf der Trägerbahn 3 kontinuierlich, mit gleich bleibender hoher Geschwindigkeit, beispielsweise 1,5m/s, zugeführt. Die Leseeinheit 10 liest den Zustand eines Transponders 2 drahtlos aus und übermittelt diesen an die Steuereinheit 50. Da im gezeigten Ausführungsbeispiel alle Transponder fehlerfrei sind, erfolgt kein Aussondern, d.h. die Abtupfrolle 40 wird nicht angesteuert.

Die Trägerbahn 3 ist über die Ablöseeinrichtung in Form der ersten Trägerbahnumlenkeinrichtung 30, der Umlenkwalze 32 und der zweiten Trägerbahnumlenkeinrichtung 31 geführt. Die erste Trägerbahnumlenkeinrichtung 30 weist eine erste ebene Fläche 34 in der Transportrichtung x der Trägerbahn 3 und die zweite Trägerbahnumlenkeinrichtung 31 eine zweite ebene Fläche 35 in der Transportrichtung x der Trägerbahn 3 auf, wobei zwischen der ersten Fläche 34 und der zweiten Fläche 35 ein Spalt 33 gebildet ist. Den Spalt 33 begrenzende Kanten der ersten und der zweiten Fläche verlaufen parallel. Eine Drehachse der Umlenkwalze 32 verläuft parallel zu den Kanten, in horizontaler Richtung in Spaltmitte und in vertikaler Richtung um einen Betrag zu den Flächen 34 und 35 nach unten versetzt, der in etwa doppelt so groß ist wie ein Durchmesser der Umlenkwalze 32.

Wie in Fig. 1 gezeigt, bewirkt die Ablöseeinrichtung mittels ihrer ersten Trägerbahnumlenkeinrichtung 30 durch Umlenken der Trägerbahn 3 aus der Transportrichtung x in eine Ablöserichtung a das teilweise Ablösen des Transponders 2 in Transportrichtung x am Beginn des Spalts 33. Eine nach unten geneigte Seite bzw. Fläche 36 der Trägerbahnumlenkeinrichtung 30 bildet mit der Fläche 34 einen spitzen Winkel, wobei der Trägerbahnverlauf bewirkt, dass sich der Transponder 2 in diesem Bereich von der Trägerbahn 3 selbstständig abschält und sich aufgrund seiner Biegesteifigkeit über den Spalt 33 in Transportrichtung x auf die zweite Trägerbahnumlenkeinrichtung 31 zu bewegt. Der Transponder 2 ist länger als der Spalt 33, so dass er sich maximal durch einen durch den Spalt 33 festgelegten Anteil von der Trägerbahn 3 ablöst.

Wenn sich der Transponder 2 über den Spalt 33 hinweg bewegt hat, erreicht er mit seinem vorderen Bereich die zweite Trägerbahnumlenkeinrichtung 31 in einem Umlenkabschnitt, in dem ein Wiederum lenken der Trägerbahn 3 in die Transportrichtung x erfolgt. Sobald der Transponder 2 die Trägerbahn 3 im Umlenkabschnitt erreicht, erfolgt ein Wiederaufbringen des im Bereich des Spalts 33 von der Trägerbahn 3 abgelösten Transponders versetzt zu seiner ursprünglichen Position auf der Trägerbahn 3. Das Wiederaufbringen kann durch eine nicht gezeigte Andrückwalze unterstützt werden, die ein Andrücken eines wieder aufgebrachten Transponders auf die Trägerbahn 3 bewirkt und somit die Haftfähigkeit in etwa auf einen Wert wie vor dem Ablösen erhöht.

Wenn ein Transponder 2 fehlerfrei ist, bewegt er sich folglich unter teilweisem Ablösen von der Trägerbahn 3 über den Spalt 33 und wird versetzt wieder auf die Trägerbahn 3 aufgebracht. Dieser Vorgang lässt sich mit hoher, konstanter Trägerbahngeschwindigkeit durchführen.

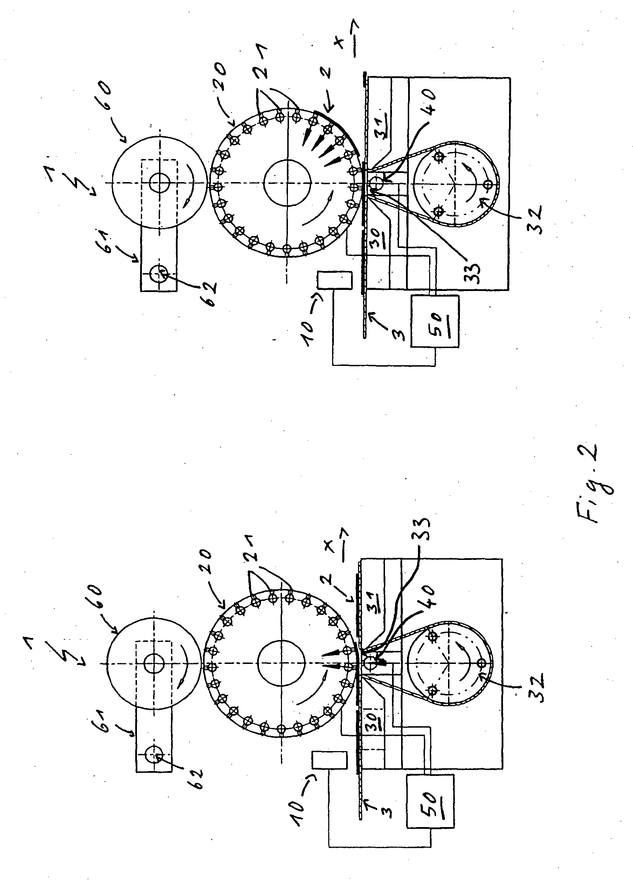

Fig. 2 zeigt einen Fall an zwei unterschiedlichen Zeitpunkten, bei dem ein über den Spalt 33 bewegter Transponder 2 ausgesondert, d.h. nicht wieder auf die Trägerbahn 3 aufgebracht wird.

Die Leseeinheit 10 liest den Zustand eines Transponders 2 drahtlos aus und übermittelt diesen an die Steuereinheit 50. Da im gezeigten Ausführungsbeispiel der über den Spalt 33 bewegte Transponder fehlerhaft ist, muss dieser ausgesondert werden, d.h. er darf nach dem teilweisen Ablösen nicht wieder auf die Trägerbahn 3 aufgebracht werden.

Hierzu steuert die Steuereinheit 50 die Abtupfrolle 40 derart an, dass diese bei der Bewegung des fehlerhaften Transponders 2 über den Spalt 33 von unten gegen einen abgelösten Bereich des Transponders 2 drückt. Der Transponder 2 wird folglich aus der Transportrichtung x abgelenkt bzw. gebogen und gegen die Übernahmewalze 20 gedrückt.

Die Übernahmewalze 20 weist über ihren Umfang verteilte Luftzirkulationsöffnungen 21 auf, die zur Erzeugung eines steuerbaren Unterdrucks oder Überdrucks dienen, wobei eine Druckluftsteuerung von der Steuereinheit 50 bereitgestellt wird. Im gezeigten Fall wird ein Unterdruck erzeugt, der ein Haften des fehlerhaften Transponders 2 am Umfang der Übernahmewalze 20 bewirkt. Wie gezeigt, wird der Transponder 2 kontinuierlich von der Trägerbahn 3 abgelöst und von der Übernahmewalze 20 übernommen. Schließlich haftet der Transponder 2 aufgrund des Unterdrucks vollständig auf der Übernahmewalze 20 und wird in Richtung der mit der Übernahmewalze 20 in Wirkverbindung stehenden Sammelwalze 60 abtransportiert.

Wenn der Transponder 2 mit der an seiner Unterseite aufgetragenen Klebstoffschicht in den Umfangsbereich der Sammelwalze 60 eintritt, erfolgt aufgrund der Klebekräfte ein Ablösen des Transponders 2 von der Übernahmewalze 20 in Richtung der Sammelwalze 60. Unterstützend kann der im Bereich der Öffnungen 21 erzeugte Unterdruck deaktiviert oder in einen Überdruck umgewandelt werden.

Die Sammelwalze 60 ist an einer Schwinge 61 aufgehängt, die in einer Drehachse 62 drehbar gelagert ist. Die fehlerhaften Transponder werden fortlaufend auf die Sammelwalze 60 aufgetragen bzw. aufgeklebt, so dass sich mehrere Schichten übereinander liegender Transponder bilden können. Eine zunehmende Schichtdicke wird durch eine Drehung der Schwinge 61 automatisch kompensiert. Wenn die Schichtdicke ein bestimmtes Maß überschreitet, kann die Sammelwalze 60 gegen eine neue Sammelwalze 60 ausgetauscht werden.

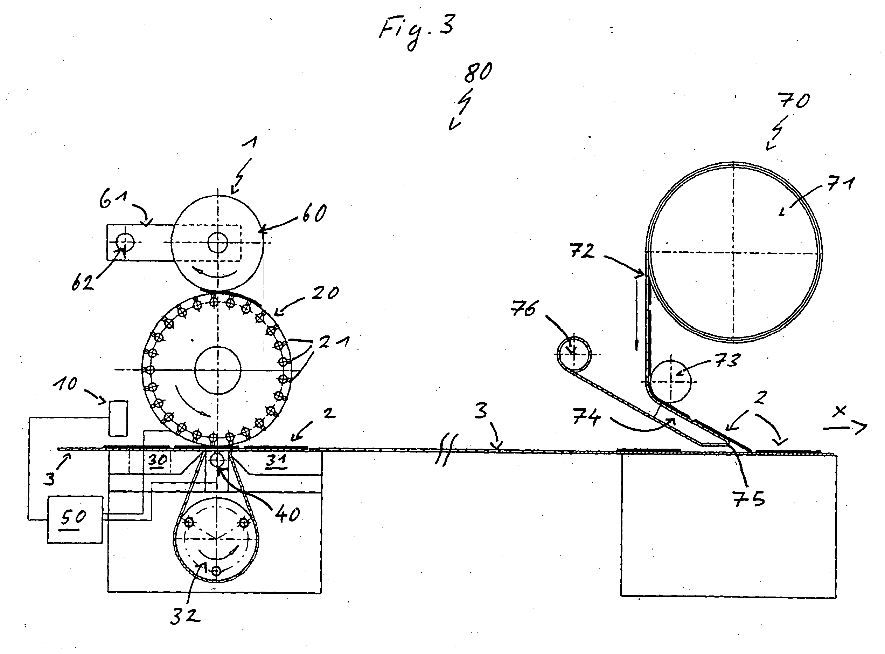

Nach dem Aussondern entsteht auf dem Trägerband 3 eine Lücken, in die anschließend ein fehlerfreier Transponder einzufügen ist. Dies wird unter Bezugnahme auf Fig. 3 beschrieben.

Fig. 3 zeigt eine Vorrichtung 80 zum kontinuierlichen Erzeugen einer fehlerfreien Trägerbahn mit der Vorrichtung 1 zum kontinuierlichen Aussondern von Fig. 1. Die Vorrichtung 80 umfasst neben der bereits in Fig. 1 gezeigten Vorrichtung 1 eine Spendeeinrichtung 70, die in Lücken bzw. Bereiche der Trägerbahn 3, aus denen ein fehlerhafter Transponder 2 ausgesondert ist, einen fehlerfreien Transponder 2 einfügt.

Die Spendeeinrichtung 70 umfasst eine Speicherrolle 71, auf der eine weitere Trägerbahn 72 aufgewickelt ist, auf der ausschließlich fehlerfreie Transponder 2 aufgebracht sind. Die Trägerbahn 72 ist über eine Umlenkrolle 73 und eine Umlenkeinrichtung 74 geführt. Die Umlenkeinrichtung 74 erzeugt aufgrund ihrer Form eine Bahnumlenkung in einem Bereich 75 derart, dass dort ein von der Speicherrolle 71 zugeführter Transponder 2 von der weiteren Trägerbahn 72 abgelöst und auf die Trägerbahn 2 in eine Lücke eines zuvor entfernten Transponders passgenau aufgebracht wird. Die weitere Trägerbahn 72 wird anschließend auf einer Wickeleinrichtung 76 aufgewickelt. Die Spendeeinrichtung 70 wird nicht kontinuierlich betreiben, sondern genau dann aktiviert, wenn zuvor von der Vorrichtung 1 ein Transponder 2 von der Trägerbahn 2 entfernt wurde.

In Transportrichtung x hinter der Spendeeinrichtung 70 kann eine nicht gezeigte Programmiereinrichtung zur Programmierung der fehlerfreien Transponder 2 vorgesehen sein. Beispielsweise können hier Herstellerinformationen oder ein Produktcode in einen Transponderspeicher geschrieben werden.

Zur Erhöhung des Durchsatzes der in Fig. 3 gezeigten Vorrichtung 80 können die Transponder 2 in mehreren Reihen auf der Trägerbahn 2 angeordnet sein.

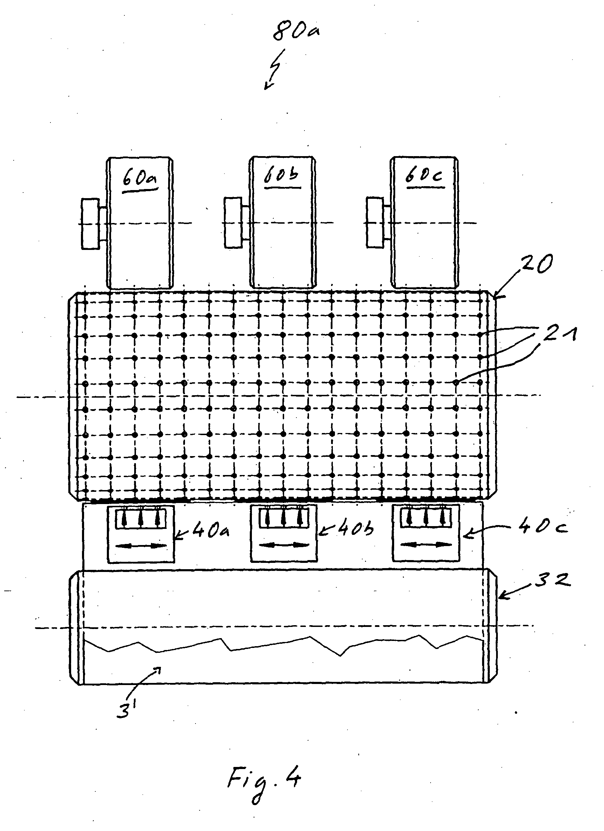

Fig. 4 zeigt eine hierzu modifizierte Vorrichtung 80a in einer Ansicht in Transportrichtung x. Die Vorrichtung 80a ist zur Verarbeitung einer Trägerbahn 3' mit drei Reihen von Transpondern 2 geeignet. Grundsätzlich ist die Vorrichtung 80a in gleicher Weise wie die Vorrichtung 80 aufgebaut und arbeitet entsprechend. Die Vorrichtung 80a weist jedoch drei Auswahleinrichtungen jeweils in Form einer Drucklufteinrichtung 40a, 40b und 40c auf, die einer jeweiligen Reihe der Trägerbahn 3' zugeordnet sind. Weiterhin ist pro Reihe eine Sammelwalze 60a, 60b und 60c vorgesehen.

Die Drucklufteinrichtungen 40a, 40b und 40c arbeiten unabhängig voneinander, da Fälle auftreten können, in denen bezogen auf eine gleiche Position in Transportrichtung x in einer Reihe ein Transponder entfernt werden muss und in einer anderen nicht. Wenn ein Transponder ausgewählt bzw. entfernt wird, erzeugt die zugehörige Drucklufteinrichtung 40a, 40b bzw. 40c eine Druckluftströmung, die ein Auslenken des zu entfernenden Transponders in Richtung der Übernahmewalze 20 bewirkt. Eine Übernahme und ein Abtransport des fehlerhaften Transponders 2 erfolgt in gleicher Weise wie bei der in Fig. 3 gezeigten Vorrichtung 80.

Ein fehlerhafter Transponder 2 wird anschließend auf eine zu seiner Reihe gehörende Sammelwalze 60a, 60b bzw. 60c aufgetragen.

Die gezeigten Ausführungsformen ermöglichen eine sichere Erzeugung fehlerfreier Trägerbahnen bei gleichzeitig hoher Geschwindigkeit, wodurch der mögliche Durchsatz optimiert wird.

## Patentansprüche

1. Vorrichtung (1) zum kontinuierlichen Aussondern fehlerhafter Bauelemente aus einer Menge von Bauelementen (2), die lösbar auf einer Trägerbahn (3) in mindestens einer Reihe fortlaufend angeordnet sind, mit
- einer Kontrolleinrichtung (10) zur Ermittlung fehlerhafter Bauelemente und
- einer Übernahmeeinrichtung (20) zur Übernahme auszusondernder, fehlerhafter Bauelemente (2),
**gekennzeichnet durch**
- mindestens eine Ablöseeinrichtung (30, 31, 32), die jedes Bauelement (2) zumindest teilweise von der Trägerbahn (3) ablöst und bezogen auf eine vorhergehende Position versetzt auf der selben Trägerbahn (3) wieder aufbringt, und
- mindestens eine Auswahleinrichtung (40), die ein von der Kontrolleinrichtung (10) als fehlerhaft ermitteltes, zumindest teilweise von der Trägerbahn (3) abgelöstes Bauelement (2) derart auswählt, dass dieses von der Übernahmeeinrichtung (20) übernommen wird.

2. Vorrichtung nach Anspruch 1, **dadurch gekennzeichnet, dass** die Ablöseeinrichtung eine erste Trägerbahnumlenkeinrichtung (30) umfasst, wobei die Trägerbahn (3) über die erste Trägerbahnumlenkeinrichtung (30) geführt ist und die erste Trägerbahnumlenkeinrichtung (30) durch Umlenken der Trägerbahn (3) aus einer Transportrichtung (x) in eine Ablöserichtung (a) das teilweise Ablösen des Bauelements (2) in Transportrichtung (x) bewirkt.

3. Vorrichtung nach Anspruch 2, **dadurch gekennzeichnet, dass** die Ablöseeinrichtung eine zweite Trägerbahnumlenkeinrichtung (31) umfasst, wobei die Trägerbahn (3) über die erste Trägerbahnumlenkeinrichtung (30) und die zweite Trägerbahnumlenkeinrichtung (31) geführt ist, die zweite Trägerbahnumlenkeinrichtung (31) ein Umlenken der Trägerbahn (3) in die Transportrichtung (x) in einem zugehörigen Umlenkabschnitt bewirkt und in dem Umlenkabschnitt ein Wiederaufbringen des zumindest teilweise von der Trägerbahn (3) abgelösten Bauelements (2) auf die Trägerbahn (3) erfolgt.

4. Vorrichtung nach Anspruch 3, **dadurch gekennzeichnet, dass** die Ablöseeinrichtung eine Umlenkwalze (32) umfasst, wobei die Trägerbahn (3) über die erste Trägerbahnumlenkeinrichtung (30), die Umlenkwalze (32) und die zweite Trägerbahnumlenkeinrichtung (31) geführt ist.

5. Vorrichtung nach Anspruch 4, dadurch geke.nnzeichnet, dass die erste Trägerbahnumlenkeinrichtung (30) eine erste Fläche (34) in einer Transportebene der Trägerbahn (3) und die zweite Trägerbahnumlenkeinrichtung (31) eine zweite Fläche (35) in der Transportebene der Trägerbahn (3) aufweisen, wobei zwischen der ersten Fläche (34) und der zweiten Fläche (35) ein Spalt (33) gebildet ist und eine Drehachse der Umlenkwalze (32) außerhalb der Transportebene liegt.

6. Vorrichtung nach einem der vorhergehenden Ansprüche, **dadurch gekennzeichnet, dass** die Auswahleinrichtung eine Abtupfrolle (40) umfasst, mit welcher ein fehlerhaftes, zumindest teilweise von der Trägerbahn (3) abgelöstes Bauelement (2) zur Auswahl in Richtung der Übernahmeeinrichtung (20) ausgelenkt wird.

7. Vorrichtung nach einem der vorhergehenden Ansprüche, **dadurch gekennzeichnet, dass** die Auswahleinrichtung eine Drucklufteinrichtung (40a, 40b, 40c) umfasst, mit welcher ein fehlerhaftes, zumindest teilweise von der Trägerbahn (3) abgelöstes Bauelement (2) zur Auswahl in Richtung der Übernahmeeinrichtung (20) geblasen wird.

8. Vorrichtung nach einem der vorhergehenden Ansprüche, **dadurch gekennzeichnet, dass** die Übernahmeeinrichtung eine Übernahmewalze (20) zur Übernahme fehlerhafter Bauelemente (2) umfasst.

9. Vorrichtung nach Anspruch 8, **dadurch gekennzeichnet, dass** die Übernahmewalze (20) über ihren Umfang verteilte Luftzirkulationsöffnungen (21) aufweist, die zur Erzeugung eines steuerbaren Unterdrucks oder Überdrucks dienen, der ein Haften oder Ablösen eines fehlerhaften, übernommenen Bauelements (2) bewirkt.

10. Vorrichtung nach Anspruch 8 oder 9, **gekennzeichnet durch** eine mit der Übernahmewalze in Wirkverbindung stehende Sammelwalze (60) zur Aufnahme fehlerhafter Bauelemente (2), wobei ein fehlerhaftes Bauelement (2) von der Übernahmewalze (20) auf die Sammelwalze (60) übertragen wird.

11. Vorrichtung nach einem der vorhergehenden Ansprüche, **gekennzeichnet durch** eine Andrückwalze, die ein Andrücken eines wieder aufgebrachten Bauelements auf die Trägerbahn bewirkt.

12. Vorrichtung nach einem der vorhergehenden Ansprüche, **dadurch gekennzeichnet, dass** die Bauelemente in mehreren Reihen auf der Trägerbahn (3') angeordnet sind und jeder Reihe eine Auswahleinrichtung (40a, 40b, 40c) zugeordnet ist.

13. Vorrichtung (80, 80a) zum kontinuierlichen Erzeugen einer fehlerfreien Trägerbahn (3) aus einer Trägerbahn (3) mit darauf in mindestens einer Reihe fortlaufend angeordneten Bauelementen (2), wobei die Trägerbahn (3) fehlerhafte und fehlerfreie Bauelemente aufweist,
**gekennzeichnet durch**
- eine Vorrichtung (1) zum kontinuierlichen Aussondern der fehlerhaften Bauelemente nach einem der Ansprüche 1 bis 12 und
- wenigstens eine Spendeeinrichtung (70), die in Bereiche der Trägerbahn (3), aus denen ein fehlerhaftes Bauelement (2) ausgesondert ist, ein fehlerfreies Bauelement (2) einfügt.

14. Vorrichtung nach Anspruch 13, **dadurch gekennzeichnet, dass** der Spendeeinrichtung. eine weitere Trägerbahn (72) zugeordnet ist, die ausschließlich fehlerfreie Bauelemente (2) enthält.

15. Vorrichtung nach Anspruch 13 oder 14, **dadurch gekennzeichnet, dass** die Bauelemente Transponder (2) sind.

16. Vorrichtung nach Anspruch 15, **gekennzeichnet durch** eine Programmiereinheit, welche die Transponder auf der fehlerfreien Trägerbahn programmiert.

17. Verfahren zum kontinuierlichen Erzeugen einer fehlerfreien Trägerbahn (3) aus einer Trägerbahn (3) mit darauf in mindestens einer Reihe fortlaufend angeordneten Bauelementen (2), wobei die Trägerbahn (3) fehlerhafte und fehlerfreie Bauelemente aufweist, **gekennzeichnet durch** die Schritte:
- zumindest teilweises Ablösen jedes Bauelements (2) von der Trägerbahn (3),
- Entfernen eines fehlerhaften, zumindest teilweise abgelösten Bauelements (2),
- versetztes Wiederaufbringen eines fehlerfreien Bauelements (2) auf die Trägerbahn (3) und
- Ersetzen eines entfernten Bauelements (2) **durch** ein fehlerfreies Bauelement (2).

18. Verfahren nach Anspruch 17, **dadurch gekennzeichnet, dass** eine Trägerbahngeschwindigkeit konstant ist.

## Claims

1. Apparatus (1) for continuously picking out defective components from a quantity of components (2) which are arranged continuously in at least one row in a detachable manner on a carrier strip (3), with
- a control device (10) for determining defective components, and
- a transfer device (20) for transferring defective components (2) which are to be picked out,
**characterized by**
- at least one detaching device (30, 31, 32) which at least partially detaches each component (2) from the carrier strip (3) and, with reference to a preceding position, applies it again to the same carrier strip (3) in an offset manner, and
- at least one selection device (40) which selects a component (2) which is determined as being defective by the control device (10) and is at least partially detached from the carrier strip (3), in such a manner that said component is transferred by the transfer device (20).

2. Apparatus according to Claim 1, **characterized in that** the detaching device comprises a first carrier strip deflecting device (30), the carrier strip (3) being guided via the first carrier strip deflecting device (30), and the first carrier strip deflecting device (30) bringing about the partial detachment of the component (2) in the transporting direction (x) by deflection of the carrier strip (3) from a transporting direction (x) into a release direction (a).

3. Apparatus according to Claim 2, **characterized in that** the detaching device comprises a second carrier strip deflecting device (31), the carrier strip (3) being guided via the first carrier strip deflecting device (30) and the second carrier strip deflecting device (31), the second carrier strip deflecting device (31) bringing about a deflection of the carrier strip (3) into the transporting direction (x) in an associated deflecting section, and, in the deflecting section, the component (2) which is at least partially detached from the carrier strip (3) being reapplied to the carrier strip (3).

4. Apparatus according to Claim 3, **characterized in that** the detaching device comprises a deflecting roll (32), the carrier strip (3) being guided via the first carrier strip deflecting device (30), the deflecting roll (32) and the second carrier strip deflecting device (31).

5. Apparatus according to Claim 4, **characterized in that** the first carrier strip deflecting device (30) has a first surface (34) in a transporting plane of the carrier strip (3) and the second carrier strip deflecting device (31) has a second surface (35) in the transporting plane of the carrier strip (3), with a gap (33) being formed between the first surface (34) and the second surface (35), and an axis of rotation of the deflecting roll (32) lying outside the transporting plane.

6. Apparatus according to one of the preceding claims, **characterized in that** the selection device comprises a dabbing roller (40) with which a defective component (2) which is at least partially detached from the carrier strip (3) is deflected in the direction of the transfer device (20) for selection purposes.

7. Apparatus according to one of the preceding claims, **characterized in that** the selection device comprises a compressed air device (40a, 40b, 40c) with which a defective component (2) which is at least partially detached from the carrier strip (3) is blown in the direction of the transfer device (20) for selection purposes.

8. Apparatus according to one of the preceding claims, **characterized in that** the transfer device comprises a transfer roll (20) for transferring defective components (2).

9. Apparatus according to Claim 8, **characterized in that** the transfer roll (20) has air circulation openings (21) which are distributed over its circumference and serve to generate a controllable negative pressure or positive pressure which brings about adhesion or detachment of a defective, transferred component (2).

10. Apparatus according to Claim 8 or 9, **characterized by** a collecting roll (60), which is operatively connected to the transfer roll, for deceiving defective components (2), a defective component (2) being transmitted by the transfer roll (20) to the collecting roll (60).

11. Apparatus according to one of the preceding claims, **characterized by** a press-on roll which causes a reapplied component to be pressed onto the carrier strip.

12. Apparatus according to one of the preceding claims, **characterized in that** the components are arranged in a number of rows on the carrier strip (3') and each row is assigned a selection device (40a, 40b, 40c).

13. Apparatus (80, 80a) for continuously producing a defect-free carrier strip (3) from a carrier strip (3) with components (2) arranged continuously thereon in at least one row, the carrier strip (3) having defective and defect-free components,
**characterized by**
- an apparatus (1) for continuously picking out the defective components according to one of Claims 1 to 12, and
- at least one dispensing device (70) which inserts a defect-free component (2) into regions of the carrier strip (3) from which a defective component (2) is picked out.

14. Apparatus according to Claim 13, **characterized in that** the dispensing device is assigned a further carrier strip (72) which exclusively contains defect-free components (2).

15. Apparatus according to Claim 13 or 14, **characterized in that** the components are transponders (2).

16. Apparatus according to Claim 15, **characterized by** a programming unit which programs the transponders on the defect-free carrier strip.

17. Method for continuously producing a defect-free carrier strip (3) from a carrier strip (3) with components (2) arranged continuously thereon in at least one row, the carrier strip (3) having defective and defect-free components, **characterized by** the following steps:
- at least partially detaching each component (2) from the carrier strip (3),
- removing a defective, at least partially detached component (2),
- reapplying a defect-free component (2) to the carrier strip (3) in an offset manner, and
- replacing a removed component (2) by a defect-free component (2).

18. Method according to Claim 17, **characterized in that** a carrier strip speed is constant.

## Revendications

1. Dispositif (1) pour séparer en continu des composants défectueux d'une quantité de composants (2) qui sont disposés, de manière amovible, en au moins une rangée sans interruption sur une bande de support (3), comprenant
- un dispositif de contrôle (10) pour déterminer des éléments défectueux et
- un dispositif de transfert (20) pour transférer des composants (2) défectueux devant être séparés,
**caractérisé par**
- au moins un dispositif de détachement (30, 31, 32) qui détache chaque composant (2) au moins partiellement de la bande de support (3) et le réapplique de nouveau sur la même bande de support (3), de manière décalée par rapport à une position précédente, et
- au moins un dispositif de sélection (40) qui sélectionne un composant (2) au moins partiellement détaché de la bande de support (3) et déterminé comme défectueux par le dispositif de contrôle (10) de telle sorte que ce composant soit transféré par le dispositif de transfert (20).

2. Dispositif selon la revendication 1, **caractérisé en ce que** le dispositif de détachement comporte un premier dispositif de déviation de bande de support (30), la bande de support (3) étant guidée au moyen du premier dispositif de déviation de bande de support (30) et le premier dispositif de déviation de bande de support (30) provoquant le détachement partiel du composant (2) dans la direction de transport (x) par déviation de la bande de support (3) d'une direction de transport (x) à une direction de détachement (a).

3. Dispositif selon la revendication 2, **caractérisé en ce que** le dispositif de détachement comporte un deuxième dispositif de déviation de bande de support (31), la bande de support (3) étant guidée au moyen du premier dispositif de déviation de bande de support (30) et du deuxième dispositif de déviation de bande de transport (31), le deuxième dispositif de déviation de bande de support (31) provoquant une déviation de la bande de support (3) dans la direction de transport (x) dans une section de déviation correspondante et une réapplication sur la bande de support (3) du composant (2) au moins partiellement détaché de la bande de support (3) se produisant dans la section de déviation.

4. Dispositif selon la revendication 3, **caractérisé en ce que** le dispositif de détachement comporte un cylindre de déviation (32), la bande de support (3) étant guidée au moyen du premier dispositif de déviation de bande de support (30), du cylindre de déviation (32) et du deuxième dispositif de déviation de bande de support (31).

5. Dispositif selon la revendication 4, **caractérisé en ce que** le premier dispositif de déviation de bande de support (30) comprend une première surface (34) dans un plan de transport de la bande de support (3) et le deuxième dispositif de déviation de bande de support (31) comprend une deuxième surface (35) dans le plan de transport de la bande de support (3), un interstice (33) étant formé entre la première surface (34) et la deuxième surface (35) et un axe de rotation du cylindre de déviation (32) se situant en dehors du plan de transport.

6. Dispositif selon l'une quelconque des revendications précédentes, **caractérisé en ce que** le dispositif de sélection comporte un rouleau tampon (40) à l'aide duquel un composant (2) défectueux au moins partiellement détaché de la bande de support (3) est dévié en direction du dispositif de transfert (20) en vue de la sélection.

7. Dispositif selon l'une quelconque des revendications précédentes, **caractérisé en ce que** le dispositif de sélection comporte un dispositif à air comprimé (40a, 40b, 40c) à l'aide duquel un composant (2) défectueux au moins partiellement détaché de la bande de support (3) est soufflé en direction du dispositif de transfert (20) en vue de la sélection.

8. Dispositif selon l'une quelconque des revendications précédentes, **caractérisé en ce que** le dispositif de transfert comporte un cylindre de transfert (20) pour transférer des composants (2) défectueux.

9. Dispositif selon la revendication 8, **caractérisé en ce que** le cylindre de transfert (20) comprend des ouvertures de circulation d'air (21) réparties sur sa périphérie, lesquelles servent à produire une dépression ou une surpression commandable qui provoque une adhérence ou un détachement d'un composant (2) défectueux transféré.

10. Dispositif selon la revendication 8 ou 9, **caractérisé par** un cylindre collecteur (60) en liaison fonctionnelle avec le cylindre de transfert pour recevoir des composants (2) défectueux, un composant (2) défectueux étant transmis par le cylindre de transfert (20) au cylindre collecteur (60).

11. Dispositif selon l'une quelconque des revendications précédentes, **caractérisé par** un cylindre presseur qui provoque un pressage sur la bande de support d'un composant de nouveau appliqué.

12. Dispositif selon l'une quelconque des revendications précédentes, **caractérisé en ce que** les composants sont disposés en plusieurs rangées sur la bande de support (3') et un dispositif de sélection (40a, 40b, 40c) est associé à chaque rangée.

13. Dispositif (80, 80a) pour produire en continu une bande de support exempte de défauts (3) à partir d'une bande de support (3) sur laquelle sont disposés sans interruption en au moins une rangée des composants (2), la bande de support (3) comprenant des composants défectueux et des composants exempts de défauts,
**caractérisé par**
- un dispositif (1) pour séparer en continu les composants défectueux selon l'une quelconque des revendications 1 à 12 et
- au moins un dispositif de distribution (70) qui insère un composant (2) exempt de défauts dans des régions de la bande de support (3) desquelles un composant (2) défectueux est séparé.

14. Dispositif selon la revendication 13, **caractérisé en ce qu'**une bande de support (72) supplémentaire est associée au dispositif de distribution, laquelle contient exclusivement des composants (2) exempts de défauts.

15. Dispositif selon la revendication 13 ou 14, **caractérisé en ce que** les composants sont des transpondeurs (2).

16. Dispositif selon la revendication 15, **caractérisé par** une unité de programmation qui programme les transpondeurs sur la bande de support exempte de défauts.

17. Procédé pour produire en continu une bande de support exempte de défauts (3) à partir d'une bande de support (3) sur laquelle sont disposés sans interruption en au moins une rangée des composants (2), la bande de support (3) comprenant des composants défectueux et des composants exempts de défauts, **caractérisé par** les étapes :
- au moins partiellement détacher chaque composant (2) de la bande de support (3),
- enlever un composant (2) défectueux au moins partiellement détaché,
- réappliquer de manière décalée sur la bande de support (3) un composant (2) exempt de défauts et
- remplacer un composant (2) enlevé par un composant (2) exempt de défauts.

18. Procédé selon la revendication 17, **caractérisé en ce qu'**une vitesse de bande de support est constante.
